# EUROPEAN PATENT APPLICATION

(11) **EP 1 258 340 A2**
(43) Date of publication of application: **20.11.2002**
(21) Application number: 02253287.3
(22) Date of filing: 10.05.2002
(51) Int. Cl.: B29D 23/00, F16L 9/12

(54) **Pipes and manufacture of such pipes**

(30) Priority: 10.05.2001 GB 0111347
(71) Applicant: TFX Group Limited, Ripley Derbyshire DE5 3NW (GB)
(72) Inventor: Miller, Andrew Howard John, Milton Keynes MK8 8PQ (GB)
(74) Representative: Wightman, David Alexander

(57) **Abstract**

A pipe (1) has a barrier layer (4) of metal foil (7) between an inner core (2) and an outer cover (6) each bonded to the barrier layer by a tie layer (3,5) formed integrally with the core (2) and cover (6). The tie layer (3) of the core (2) is activated by heating prior to applying the barrier layer (4) and bonding may be enhanced by applying a thin layer of the tie layer material to the heat activated tie layer (3).

## Description

This invention concerns improvements in or relating to pipes and the manufacture of such pipes. The invention has particular, but not exclusive, application to pipes for use in automotive vehicles to carry fluids containing hydrocarbons, especially fuel, in liquid or vapour form.

It is desirable from both safety and environmental aspects to reduce, as far as possible, the emission of hydrocarbons from automotive fuel pipes.

To this end, it has been proposed to construct fuel pipes having one or more layers of fluoropolymer materials which act as a barrier to prevent the hydrocarbons in the fuel permeating through the pipe wall.

The use of such fluoropolymer materials has enabled manufacturers to reduce the hydrocarbon emission characteristics of fuel pipes to meet the higher standards being set by the automotive industry to comply with the regulations controlling such emissions.

The available fluoropolymer materials are expensive, however, and there are problems for the manufacture of fuel pipes incorporating these materials.

Thus, the fuel pipes must be resistant not only to permeation by hydrocarbons but also to the effects of heat, ozone, chemicals as well as having the necessary impact and burst strength together with abrasion resistance required for the conditions in which the pipe is employed. For example, the pipe may be exposed to elevated temperatures under the vehicle bonnet and may be covered with oil, brake fluid and other fluids which may escape or be spilled in use.

The fluoropolymer materials are incapable of providing the range of properties required and other polymer materials have to be included to produce a pipe which meets the performance levels set by the automotive industry.

Typically the pipes are formed by extruding layers of the various polymer materials to produce a multi-layer pipe. The fluoropolymer materials, however, do not bond well to the other polymer materials commonly employed to provide the required range of properties in the finished pipe.

Various proposals have been made to improve the adhesion between the layers of fluoropolymer and other polymer materials but these add further to the overall costs of production.

Furthermore, the fluoropolymer materials while providing improved resistance to permeation by hydrocarbons are not completely impervious and a low level of emissions is still possible. Such low levels may increase with time due to degradation of the materials of the pipe and/or from damage to the pipe.

As a result, the use of such fluoropolymer materials may not meet future limits on the level of hydrocarbon emissions allowed without significant increase in production costs. For example by increasing the thickness of the fluoropolymer layer(s), which may not be acceptable and which may also have an adverse affect on other properties of the pipe, for example flexibility.

Accordingly, there is a need for a pipe capable of meeting the current limits on hydrocarbon emission and preferably any future reduction in these limits which is easier and less expensive to manufacture than existing pipes incorporating fluoropolymer materials.

Recently, it has been proposed to construct fuel pipes having a metal layer, for example aluminium foil, impermeable to fluids, especially fuels containing hydrocarbons, between inner and outer layers of polymeric material. The manufacture of such pipes requires an effective bond between the metal layer and the adjacent layers of polymeric material.

Typically, the metal foil is coated with adhesive and wrapped around the inner layer with the edges of the foil overlapping so that the metal foil adheres to itself in the region of the overlap and to the adjacent layers of polymeric material.

There are problems in obtaining satisfactory adhesion between the layers of polymeric material and the metal foil. As a result, tubes manufactured in this way have been susceptible to failure of the adhesive bonds allowing liquids to permeate through the tube wall.

The present invention has been made from a consideration of the problems and disadvantages of existing pipes and seeks to provide a pipe, especially a fuel pipe, in which these problems and disadvantages are mitigated.

More specifically, it is a preferred object of the present invention to provide a pipe having a metal barrier layer with improved adhesion between the metal layer and the adjacent layers of polymeric material.

It is another preferred object of the present invention to provide a pipe having a metal barrier layer that is substantially impermeable to fluids, especially fuels containing hydrocarbons.

It is yet a further preferred object of the present invention to provide a method of manufacturing a pipe having a metal barrier layer between adjacent layers of polymeric material in which the metal layer bonds to the polymeric material.

According to a first aspect of the present invention there is provided a method of manufacturing a pipe including the steps of extruding an inner core of polymeric material, activating an outer surface of the core and applying a metal foil to the core so as to overlap edges of the foil and form a substantially impermeable barrier layer bonded to the activated outer surface of the core, and extruding an outer cover of polymeric material over the metal foil.

Preferably, the inner core and outer cover each comprise at least one layer of polymeric material chosen to provide the desired properties for the intended application of the pipe and a tie layer of polymeric material chosen to bond the core and cover to the metal foil of the barrier layer.

For example, the core and cover may each comprise at least one layer of thermoplastics and/or rubbers (natural or synthetic). Suitable thermoplastics include polyolefins, polyamides, polyesters, thermoplastic elastomers, as well as copolymers of any of these or other suitable materials as will be familiar to those skilled in the art.

Advantageously, each tie layer is formed integrally with the adjacent layer of the core or cover so as to be permanently united therewith. For example, each tie layer may be formed by co-extrusion with the adjacent layer of the core or cover. Suitable materials for each tie layer include polyamide/polyethylene copolymers, modified polyamides, modified polyolefins, copolymer of ethylene and vinyl acetate, copolymer of ethylene and butyl acrylate, copolymer of ethylene and methyl acrylate, copolymer of ethylene and glycidyl methacrylate, terpolymer of ethylene, butyl acrylate and maleic anhydride, terpolymer of ethylene, methyl acrylate and glycidyl methacrylate, acid modified ethylene vinyl acetate, acid modified ethylene acrylate, acid and acrylate modified ethylene vinyl acetate, anhydride modified ethylene vinyl acetate, anhydride modified ethylene vinyl acetate copolymers, anhydride modified ethylene acrylate, anhydride modified polyetheylene (high density, low density and linear low density), anhydride modified polypropylene, ethylene acid copolymers, and polyamide/polybutylene terephthalate blend with vinyl acetate, acrylic acid or maleic anhydride grafted onto polamide in the blend.

Preferably, the outer surface of the core is activated prior to applying the metal foil by heating the core to soften the tie layer sufficiently to bond to the metal foil.

The adhesion between the heat activated tie layer and metal foil of the barrier layer may be enhanced by applying a thin layer of the material of the tie layer to the heat activated core prior to applying the metal foil.

Preferably, the tie layers of the core and cover have a thickness in the range 0.05 to 0.5mm, more preferably 0.05 to 0.25mm and most preferably 0.05 to 0.15mm with a thickness of approximately 0.1mm being especially preferred.

Where a thin layer of the material of the tie layer is applied to the heat activated tie layer of the core, this additional layer may have a thickness in the range 0.01 to 0.05mm with a thickness of approximately 0.03mm being preferred.

The barrier layer may be formed by wrapping the metal foil around the inner core with the edges overlapping spirally to form a helical lap joint. More preferably, however, the metal foil is wrapped around the inner core to form the barrier layer with the edges of the metal foil overlapping longitudinally to form an axial lap joint.

Advantageously, the barrier layer is made of metal foil having a thickness in the range 0.01 to 0.03mm with a thickness of around 0.02mm being especially preferred.

The overlapping edges of the metal foil may be secured together to form a continuous circumferential barrier layer. For example the edges may be ultrasonically welded together.

According to a second aspect of the present invention there is provided apparatus for carrying out the method according to the first aspect of the invention.

Preferably, the apparatus includes dies for co-extrusion of each tie layer with the adjacent layer of the core or cover. In this way, the tie layers are formed integrally with and are permanently united with the adjacent layer of the core and cover.

Advantageously, the apparatus includes a ring heater for heating the outer surface of the core to activate the tie layer for application of the metal foil of the barrier layer.

Preferably, the apparatus includes a wrapping unit for applying the metal foil of the barrier layer. The wrapping unit may comprises a series of rollers for folding the metal foil around the core with the edges overlapping longitudinally and applying pressure to assist bonding of the metal foil to the tie layer of the core.

According to a third aspect of the present invention, there is provided a pipe made by the method and/or apparatus according to the first aspect of the invention.

The invention will now be described in more detail, by way of example only, with reference to the accompanying drawings wherein:-
**Figure 1** is a cross-sectional view of a pipe embodying the invention; and
**Figure 2** shows diagrammatically apparatus for making the pipe shown in Figure 1.

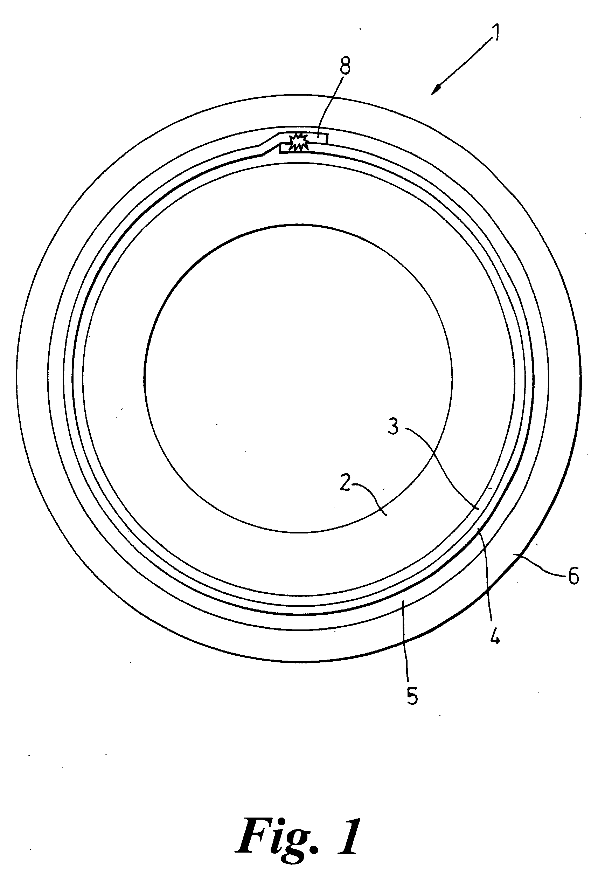

Referring first to Figure 1 of the drawings, a pipe 1 for transporting hydrocarbon fuels has a multi-layer wall comprising an inner layer 2, a tie layer 3, a barrier layer 4, a tie layer 5 and an outer layer 6.

The inner layer 2 and outer layer 6 can be made of any polymeric materials providing the required physical and chemical properties for the intended application of the pipe 1. In this embodiment, the inner layer 2 and outer layer 6 are made of polyamide 12 available from Degussa under the trade name VESTAMID. The tie layers 3,5 are made of an ethylene-methacrylic acid copolymer such as available under the trade name NUCREL from Du Pont.

The inner layer 2 has a wall thickness of 0.4mm to provide the required properties of tensile and compressive strength as well as resistance to internal pressure. The outer layer 6 has a wall thickness of 0.4mm to provide impact resistance and other desirable properties depending on where the fuel pipe 1 is used. The tie layers 3,5 each have a wall thickness of approximately 0.1mm. In this embodiment, the pipe 1 has an overall wall thickness of 1.0mm and an external diameter of 8.0mm.

The barrier layer 4 is made of a thin metal foil 7 which in this embodiment is aluminium foil, having a thickness of 0.018 mm. The barrier layer 4 is formed by wrapping the foil 7 longitudinally to overlap the edges of the foil 7 in a lap joint 8.

The metal foil 7 provides a substantially impermeable barrier to prevent hydrocarbons or other components of the fuel permeating outwards through the wall of the pipe 1. The metal foil 7 also prevents liquids or gases external to the pipe 1 penetrating through the wall of the pipe 1 and contaminating the fuel.

The materials employed for the inner layer 2 and outer layer 6 have been found to be difficult to bond to the aluminium foil 7 and attempts to improve adhesion by pre-coating the foil 7 with adhesive have not been entirely successful.

The pipe 1 of the present invention employs tie layers 3 and 5 to bond the inner layer 2 and outer layer 6 respectively to the aluminium foil 7. The tie layers 3, 5 are formed integrally with the layers 2, 6 so as to be permanently united therewith.

The tie layers 3,5 bond more effectively to the aluminium foil 7 than the materials of the layers 2,6 and can be relatively thin compared to these layers. Thus, in this embodiment each tie layer 3,5 has a thickness of approximately 0.1mm compared to 0.4mm for each of the inner layer 2 and outer layer 6.

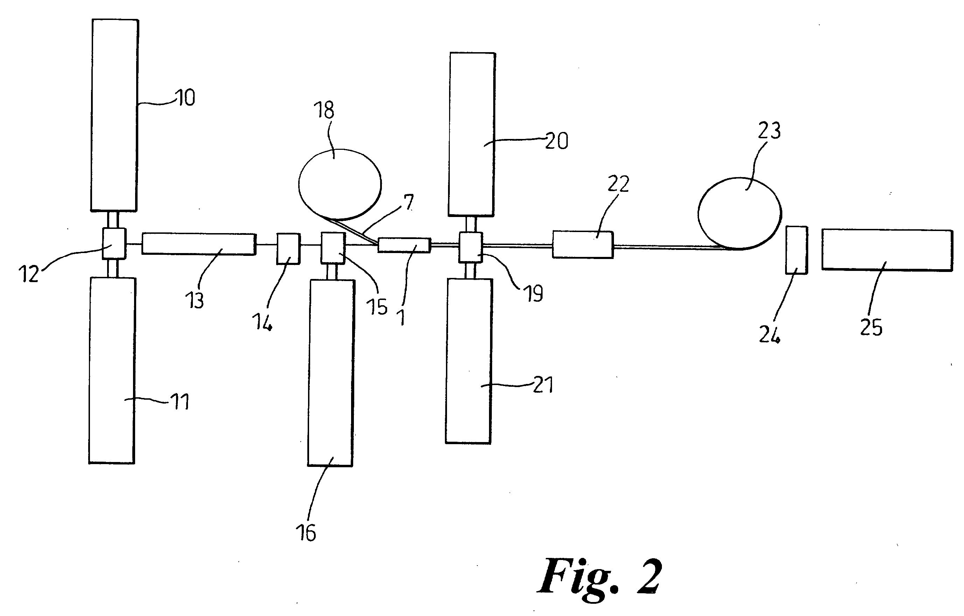

Referring now to Figure 2, apparatus for making the pipe 1 is shown and includes an extruder 10 for the inner layer 2 and an extruder 11 for the tie layer 3. The extruders 10,11 are connected to a co-extrusion die 12 for extruding both layers 2, 3 simultaneously.

The layers 2,3 emerging from the die 12 bond to each other and are permanently united during passage through a cooling/sizing bath 13 to produce a form stable tubular core for further processing without requiring a mandrel or other internal support.

The outer surface of the core emerging from the bath 13 is then activated by passage through a ring burner 14 to melt the surface of tie layer 3 without affecting the bond to the inner layer 2.

Next, the activated outer surface of the tie layer 3 is optionally provided with a thin layer of NUCREL by passage through a cross-head die 15 connected to an extruder 16. This additional layer preferably has a thickness of around 0.03mm.

The partially formed pipe 1 emerging from the die 15 has a form stable inner layer 2 united to a tie layer 3 having an activated outer surface. This is then fed to a wrapping unit 17 for applying a strip of aluminium foil 7 from a storage reel 18 onto the activated surface.

The wrapping unit 17 includes a series of rollers (not shown) arranged to fold the strip of aluminium foil 7 around the core so that the side edges of the strip overlap longitudinally to form the lap joint 8.

The rollers apply pressure to the foil 7 as it is applied so that the foil 7 bonds to the activated surface of the core. Pressure can be applied at this stage due to the inner layer 2 of the core being form stable.

The partially formed pipe 1 emerging from the wrapper unit 17 has the barrier layer 4 bonded to the core and is fed to a co-extrusion die 19 connected to an extruder 20 for the tie layer 5 and to an extruder 21 for the cover layer 6.

The layers 5,6 are co-extruded simultaneously over the barrier layer 4 and the tie layer 5 bonds to both layers 4,6.

The finished pipe 1 passes from the die 19 to a haul-off unit 22 which is controlled to pull the pipe through the apparatus and deliver the pipe 1 to a storage reel 23. In this way, the pipe 1 can be made in one continuous process.

The pipe 1 can be cut to any desired length for a particular application by a cutter 24 and passed to a collection unit 25.

As will now be appreciated, the invention enables a metal barrier layer to be provided between layers of polymeric material with excellent adhesion between all the layers of the pipe wall by the use of tie layers compatible with both the metal foil and the adjacent inner and outer layers of the pipe wall.

An important feature of the invention is the way in which the tie layers are united with the adjacent inner and outer layers of the pipe wall by co-extrusion and bonded to the metal foil. For this, the inner tie layer 3 is activated by heating to soften the outer surface prior to application of the metal foil 7.

The activated surface may also be provided with an optional skin of fresh NUCREL to further assist the adhesion to the metal foil 7. It will be understood, however the skin may be omitted where heating the surface of the tie layer 3 previously co-extruded with the inner layer 2 is sufficient to achieve a satisfactory bond to the metal foil 7.

Another significant feature of the invention is the way in which an effective barrier to permeation of fuel is obtained with a metal foil of reduced thickness compared to other materials previously used for barrier layers such as fluoropolymers. In this way, a substantially impermeable barrier is obtained without significantly increasing the overall weight of the pipe or reducing the flexibility of the pipe.

It will be understood that the invention is not limited to the embodiment above-described and that various changes can be made within the spirit and scope of the invention.

For example, the core may be formed by co-extrusion of a single inner layer 2 and tie layer 3 as described. Alternatively, the inner layer 2 and tie layer 3 may be co-extruded on one or more previously extruded layers of the same or different polymeric materials to the inner layer 2 chosen to provide the desired properties in the finished pipe for the intended use. In this way, the core may comprise several layers of polymeric material under the tie layer 3.

The cover may also be formed by co-extrusion of the tie layer 5 and a single cover layer 6 as described. Alternatively, one or more extra cover layers may be extruded over the cover layer 6. These extra layers may be of the same or different polymeric materials to the cover layer 6 and are chosen to provide the desired properties in the finished pipe for the intended use. In this way, the cover may comprise several layers of polymeric material over the tie layer 5.

The pipe 1 may be formed with one or more layers of reinforcing material inwardly and/or outwardly of the barrier layer. For example, the core may include at least one layer of reinforcing material to provide increased resistance to internal pressure and reduce the risk of damage to the metal foil of the barrier layer. The reinforcing material may be woven, for example a braid, or non-woven, for example a tape.

Other modifications within the spirit and scope of the present invention as described herein will be apparent to those skilled in the art.

## Claims

1. A method of manufacturing a pipe including the steps of extruding an inner core of polymeric material including an outer tie layer, activating the tie layer by heating to soften the material of the tie layer, optionally applying a thin layer of the material of the tie layer to the heat activated tie layer, applying a metal foil to the core so as to overlap edges of the foil and form a substantially impermeable barrier layer bonded to the core, and extruding an outer cover of polymeric material over the metal foil.

2. A method according to claim 1 wherein, the outer cover includes an inner tie layer to bond the cover to the metal foil of the barrier layer.

3. A method according to claim 2 wherein, the core and cover each comprise at least one layer of thermoplastics and/or rubbers (natural or synthetic), for example polyolefins, polyamides, polyesters, thermoplastic elastomers, as well as copolymers of any of these.

4. A method according to any preceding claim wherein, the tie layer material is selected from the group comprising polyamide/polyethylene copolymers, modified polyamides, modified polyolefins, copolymer of ethylene and vinyl acetate, copolymer of ethylene and butyl acrylate, copolymer of ethylene and methyl acrylate, copolymer of ethylene and glycidyl methacrylate, terpolymer of ethylene, butyl acrylate and maleic anhydride, terpolymer of ethylene, methyl acrylate and glycidyl methacrylate, acid modified ethylene vinyl acetate, acid modified ethylene acrylate, acid and acrylate modified ethylene vinyl acetate, anhydride modified ethylene vinyl acetate, anhydride modified ethylene vinyl acetate copolymers, anhydride modified ethylene acrylate, anhydride modified polyetheylene (high density, low density and linear low density), anhydride modified polypropylene, ethylene acid copolymers, and polyamide/polybutylene terephthalate blend with vinyl acetate, acrylic acid or maleic anhydride grafted onto polamide in the blend.

5. A method according to any preceding claim wherein, each tie layer is formed integrally with the adjacent layer of the core or cover by co-extrusion so as to be permanently united therewith.

6. A method according to any preceding claim wherein, the tie layers of the core and cover have a thickness in the range 0.05 to 0.5mm, preferably in the range 0.05 to 0.25mm, more preferably in the range 0.05 to 0.15mm, and optimally a thickness of approximately 0.1mm.

7. A method according to any preceding claim wherein, the thin layer of the material of the tie layer applied to the heat activated tie layer of the core has a thickness in the range 0.01 to 0.05mm, optimally a thickness of approximately 0.03mm.

8. A method according to any preceding claim wherein, the barrier layer is formed by wrapping the metal foil around the inner core with the edges overlapping spirally to form a helical lap joint or longitudinally to form an axial lap joint and optionally securing the overlapping edges of the metal foil together to form a continuous circumferential barrier layer, for example by ultrasonic welding.

9. A method according to any preceding claim wherein, the barrier layer is made of metal foil having a thickness in the range 0.01 to 0.03mm, optimally a thickness of around 0.02mm.

10. A method of manufacturing a pipe including the steps of extruding an inner core of polymeric material, activating an outer surface of the core and applying a metal foil to the core so as to overlap edges of the foil and form a substantially impermeable barrier layer bonded to the activated outer surface of the core, and extruding an outer cover of polymeric material over the metal foil.

11. Apparatus for manufacturing a pipe according to any preceding claim including dies for co-extrusion of a multi-layer core including an outer tie layer, a ring heater for heating the outer surface of the core to activate the tie layer, a wrapping unit for applying a metal foil to the core to form a barrier layer, the wrapping unit comprising a series of rollers for folding the metal foil around the core with the edges overlapping longitudinally and applying pressure to assist bonding of the metal foil to the core, and dies for co-extrusion of a multi-layer cover including an inner tie layer onto the barrier layer.

12. A pipe made by the method or apparatus of any preceding claim comprising a fuel pipe.
